# EUROPEAN PATENT SPECIFICATION

(11) **EP 3 126 730 B1**
(45) Date of publication and mention of the grant of the patent: **02.10.2019**
(21) Application number: 15721319.0
(22) Date of filing: 30.03.2015
(51) Int. Cl.: F16L 33/207, B21D 17/02, B21D 39/04, B21D 19/00

(54) **METHOD FOR THE PRODUCTION OF A BUSHING FOR THE CONNECTION OF TWO TUBULAR ELEMENTS**
VERFAHREN ZUR HERSTELLUNG EINER BUCHSE ZUR VERBINDUNG VON ZWEI ROHRFÖRMIGEN ELEMENTEN
PROCÉDÉ DE PRODUCTION D'UNE DOUILLE POUR LE RACCORDEMENT DE DEUX ÉLÉMENTS TUBULAIRES

(30) Priority: 02.04.2014 IT BO20140186
(43) Date of publication of application: 08.02.2017
(60) Divisional application: 17172097.2
(73) Proprietor: I.M.M. Hydraulics S.p.A., 66041 Atessa (IT)
(72) Inventor: VIZZARRI, Domenico, I-66041 Atessa (IT)
(74) Representative: Manconi, Stefano
(86) International application number: PCT/IB2015/052341
(87) International publication number: WO 2015/151016

(56) References cited:
- EP-A1- 0 029 380
- JP-A- H 049 224
- US-A- 2 503 826
- US-A- 2 683 928
- US-A- 5 267 758
- US-A- 5 317 799
- US-A1- 2010 140 926
- US-B1- 7 597 117

## Description

### TECHNICAL FIELD

The present invention relates to a method for the production of a bushing for the connection of two tubular elements.

The application of the present invention is particularly advantageous when connecting a flexible tubular element to a rigid tubular element, to which the following disclosure will explicitly refer without however loosing in generality.

### BACKGROUND ART

In order to connect a flexible tubular element and a rigid tubular element together, it is known to produce a bushing comprising an outer coupling, which is cup-shaped, and is delimited by an annular bottom wall hooked to the rigid tubular element.

The bushing extends around an end portion of the rigid tubular element, and further comprises an inner sleeve, which is axially locked inside the outer coupling, and has a plurality of annular teeth radially projecting towards the inside from an inner surface of the inner sleeve, and are arranged in sequence along a longitudinal axis of the bushing.

The inner sleeve generally comprises at least two cylindrical sectors connected together or it is produced from a flat blank bent into a substantially cylindrical configuration. Such a bushing is known from document US 2010/0140926 A1.

Therefore, the inner sleeve has at least one wall interruption obtained at the end faces of the above-mentioned cylindrical sectors, in one case, and at the end faces of the above-mentioned flat blank bent in its cylindrical configuration, in the other case.

Once an end portion of the flexible tubular element has been inserted between the bushing and the rigid tubular element, the bushing is radially deformed so as to allow the annular teeth of the inner sleeve to penetrate the flexible tubular element and lock the flexible tubular element on the rigid tubular element.

Known bushings for the connection of two tubular elements of the type described above have certain drawbacks mainly resulting from the fact that when the radial tightening force exerted by the bushing on the flexible tubular element exceeds a predetermined threshold value, the flexible tubular element is damaged by the bushing itself.

Known bushings for the connection of two tubular elements of the type described above also have the further drawback consisting in that, due to the mentioned wall interruption in the inner sleeve, the radial pressure exerted by the flexible tubular element on the bushing is entirely absorbed by the outer coupling, which thus needs to have relatively high thicknesses and therefore is relatively costly.

### DISCLOSURE OF INVENTION

It is the object of the present invention to provide a method for the production of a bushing for the connection of two tubular elements.

According to the present invention, there is provided a method for the production of a bushing for the connection of two tubular elements as claimed in claims 1 to 8.

### BRIEF DESCRIPTION OF THE DRAWINGS

The present invention will now be described with reference to the accompanying drawings, which show a nonlimiting embodiment thereof, in which:
figure 1 is a longitudinal section of a bushing produced by a method according to the present invention;
figure 2 diagrammatically shows the method for the production of the bushing in figure 1; and
figure 3 is a diagrammatic side view, with sectional parts, of two tubular elements connected to each other by means of the bushing in figure 1.

### BEST MODE FOR CARRYING OUT THE INVENTION

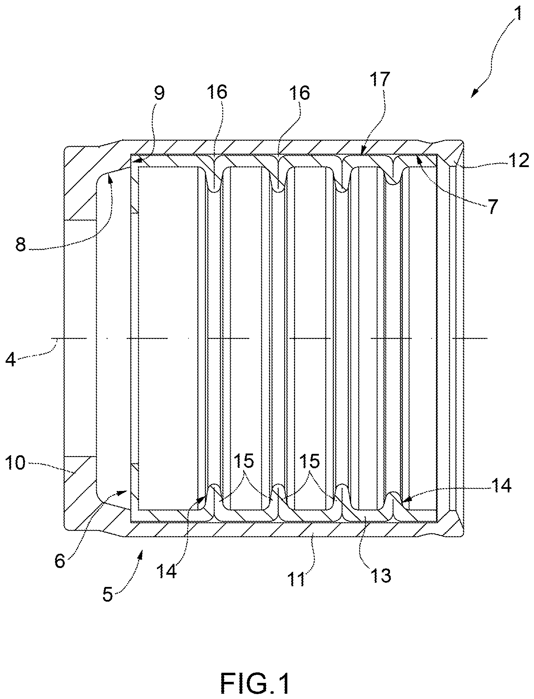

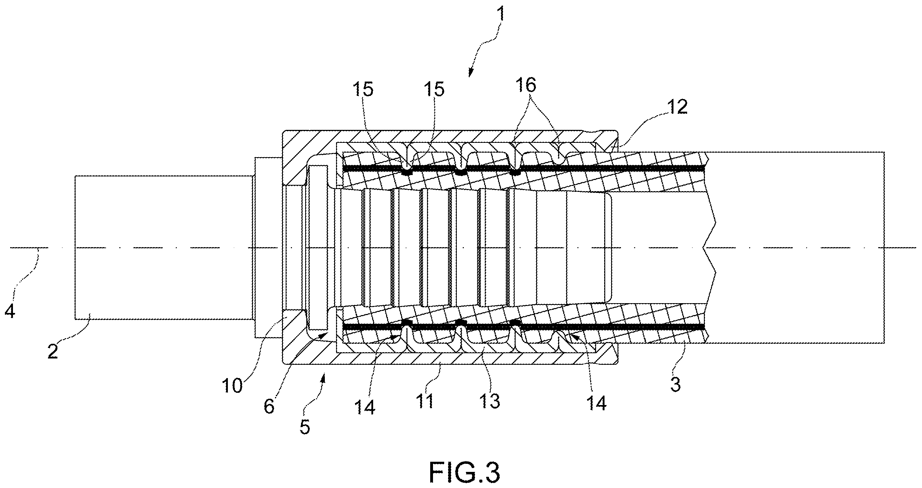

With reference to figures 1 and 3, numeral 1 indicates a bushing as a whole for connecting together two tubular elements 2, 3.

Bushing 1 has a longitudinal axis 4, is cup-shaped, and comprises an outer coupling 5 and an inner sleeve 6 mounted in coupling 5.

Coupling 5 extends around axis 4 and comprises an enlarged portion 7 and a narrow portion 8 which are connected to each other by an annular abutment 9 which is substantially perpendicular to axis 4.

Portion 8 is delimited by an annular bottom wall 10 which is substantially perpendicular to axis 4, and portion 7 is delimited by a lateral wall 11 which is substantially coaxial to axis 4.

Sleeve 6 extends around axis 4, and is axially locked inside coupling 5 between abutment 9 and an annular end flange 12 radially projecting towards the inside from the lateral wall 11 of coupling 5.

Sleeve 6 is obtained in a single piece, and is delimited by a lateral wall 13, which is coaxial to axis 4, is continuous, and has no wall interruptions and openings obtained through wall 13, in particular parallel to axis 4.

In other words, the wall 13 of sleeve 6 is complete and has no wall interruptions and openings which are typical of a sleeve produced either in several parts or from a flat blank bent in cylindrical shape.

Sleeve 6 has a plurality of annular teeth 14, which project towards the inside of bushing 1 relative to wall 13, and are aligned to one another along axis 4.

Each tooth 14 is, tangentially, a continuous annular tooth without interruptions, and is defined by two annular lateral sides 15 obtained, each, from a respective bending of wall 13.

The two sides 15 of each tooth 14 are arranged substantially in contact with each other and are connected together at a minimum diameter of tooth 14.

Sleeve 6 also has a plurality of annular recesses 16, which are obtained at an outer surface 17 of wall 13 and their number equals the number of teeth 14.

Each recess 16 is radially aligned to a corresponding tooth 14 and is obtained at the joining areas between the lateral sides 15 of the corresponding tooth 14 and wall 13.

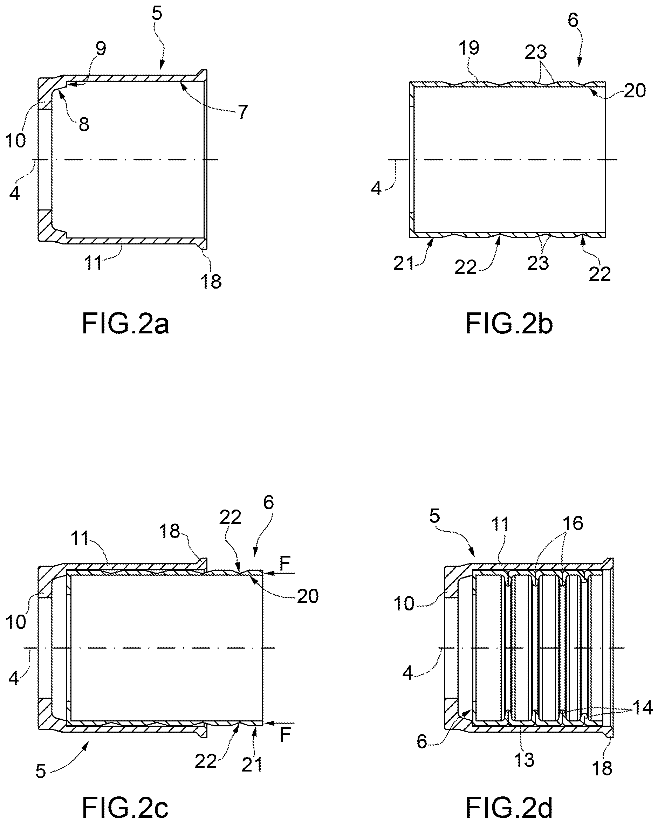

As shown in figure 2a, coupling 5 has, in an initial configuration thereof, an annular end flange 18 radially projecting towards the outside from wall 11.

With reference to figure 2b, sleeve 6 has, in an initial configuration thereof, a length, measured parallel to axis 4, longer than a length of the enlarged portion 7 of coupling 5, which is also measured parallel to axis 4.

Sleeve 6 is obtained in a single piece and has, in an initial configuration thereof, a lateral wall 19, which is continuous and has no wall interruptions and openings obtained through wall 13 parallel to axis 4.

In other words, the wall 19 of sleeve 6 is complete and has no wall interruptions and openings which are typical of a sleeve produced either in several parts or from a flat blank bent in cylindrical shape.

Wall 19 is delimited by a smooth inner surface 20 and by a shaped outer surface 21 provided with a plurality of annular recesses 22.

The recesses 22 extend around axis 4, are aligned to one another along axis 4, and are delimited, each, by two respective lateral sides 23 which substantially have the shape of a truncated cone with opposite concavities.

Bushing 1 is produced by inserting sleeve 6 inside the enlarged portion 7 of coupling 5 so that sleeve 6 is arranged in contact with abutment 9 and projects towards the outside of coupling 5 (figure 2c).

Sleeve 6 is then subjected to an axial force F applied parallel to axis 4 at a free end of sleeve 6 projecting towards the outside of coupling 5 (figure 2c).

Sleeve 6 is deformed, by means of force F, from the initial configuration thereof into a final configuration, in which sleeve 6 is entirely accommodated inside the coupling 5 itself (figure 2d).

The deformation of sleeve 6 results in the formation of lateral wall 13, teeth 14, and recesses 16.

Finally, flange 18 is radially deformed to form flange 12 and to lock sleeve 6 axially inside coupling 5 (figure 1).

With regard to the above explanation, it is worth noting that coupling 5 and sleeve 6 are preferably, but not necessarily, produced by means of moulding.

As shown in figure 3, bushing 1 is used to connect the two tubular elements 2, 3 to each other, element 2 being a rigid tubular element and element 3 being a flexible tubular element.

Bushing 1 is fitted and axially locked onto element 2, while element 3 is fitted onto element 2 and is inserted between element 2 and bushing 1.

Once element 3 has been inserted between bushing 1 and element 2, bushing 1 is radially deformed to allow the teeth 14 to engage element 3 and to lock the two elements 2 and 3 to each other.

Bushing 1 has certain advantages mainly resulting from the fact that when the radial tightening force exerted by bushing 1 on element 3 exceeds a predetermined threshold value, the presence of the recesses 16 allows bushing 1 to absorb the overload which would otherwise act on element 3, thus preventing it from breaking.

Since sleeve 6 is complete and has no wall interruptions and/or openings, the radial pressure exerted by element 3 on bushing 1 is absorbed partly by sleeve 6 and partly by coupling 5, which thus has relatively small thicknesses, therefore being relatively cost-effective.

## Claims

1. A method for the production of a bushing for the connection of two tubular elements (2, 3), the bushing being produced from an outer coupling (5), which is cup-shaped, and is delimited by an annular bottom wall (10); the method comprising the steps of:
inserting, into the outer coupling (5), an inner sleeve (6) which, in an initial configuration thereof, axially projects towards the outside of the outer coupling (5); and
applying, on the inner sleeve (6), an axial force (F) , so as to deform the inner sleeve (6) itself from the initial configuration thereof to a final configuration, in which the inner sleeve (6) is entirely held inside the outer coupling (5);
and wherein
the inner sleeve (6) is deformed, by the axial force (F), so as to generate a plurality of annular teeth (14) projecting towards the inside of the bushing relative to a lateral wall (13) of the inner sleeve (6) .

2. A method according to claim 1, wherein the axial force (F) is applied on a free end of the inner sleeve (6) projecting towards the outside of the outer coupling (5).

3. A method according to claim 1 or 2 and further comprising the step of:
deforming a free end of the outer coupling (5), so as form an annular flange (12) configured to axially lock the inner sleeve (6) in the outer coupling (5) itself.

4. A method according to any of the claims from 1 to 3, wherein the inner sleeve (6) is deformed by the axial force (F), so as to generate a plurality of first annular recesses (16), which are obtained at an outer surface (17) of the lateral wall (13) of the inner sleeve (6) .

5. A method according to any of the claims from 1 to 4, wherein, in the initial configuration thereof, the inner sleeve (6) is delimited by a smooth inner surface (20) and by a shaped outer surface (21) having a plurality of second annular recesses (22).

6. A method according to claim 5, wherein each second annular recess (22) is delimited by two lateral sides (23) substantially having the shape of a truncated cone with opposite concavities.

7. A method according to any of the claims from 1 to 6, wherein the inner sleeve (6) is obtained in a single piece and is delimited, in the initial configuration and in the final configuration thereof, by a continuous lateral wall (19, 13) without wall interruptions and/or openings.

## Patentansprüche

1. Verfahren zur Herstellung einer Buchse für die Verbindung von zwei Rohrelementen (2, 3), wobei die Buchse aus einer äußeren Kupplung (5) hergestellt wird, die becherförmig ist und durch eine ringförmige Bodenwand (10) begrenzt ist; wobei das Verfahren die folgenden Schritte umfasst:
Einsetzen, in die äußere Kupplung (5), einer Innenhülse (6), die in ihrer Anfangskonfiguration axial zur Außenseite der äußeren Kupplung (5) ragt; und
Aufbringen einer Axialkraft (F) auf die Innenhülse (6), um die Innenhülse (6) selbst von ihrer Anfangskonfiguration bis zu einer Endkonfiguration zu verformen, bei der die Innenhülse (6) vollständig innerhalb der Außenkupplung (5) gehalten wird;
und wobei
die Innenhülse (6) durch die Axialkraft (F) verformt wird, um eine Vielzahl von ringförmigen Zähnen (14) zu erzeugen, die in Bezug auf eine Seitenwand (13) der Innenhülse (6) zur Innenseite der Buchse vorstehen.

2. Verfahren nach Anspruch 1, wobei die Axialkraft (F) auf ein freies Ende der Innenhülse (6) aufgebracht wird, das zur Außenseite der Außenkupplung (5) hin vorsteht.

3. Verfahren nach Anspruch 1 oder 2 und ferner umfassend den Schritt von:
Verformen eines freien Endes der äußeren Kupplung (5), um einen ringförmigen Flansch (12) zu bilden, der konfiguriert ist, um die Innenhülse (6) in der äußeren Kupplung (5) selbst axial zu verriegeln.

4. Verfahren nach einem der Ansprüche von 1 bis 3, wobei die Innenhülse (6) durch die Axialkraft (F) verformt wird, um eine Vielzahl von ersten ringförmigen Aussparungen (16) zu erzeugen, die an einer Außenfläche (17) der Seitenwand (13) der Innenhülse (6) erhalten werden.

5. Verfahren nach einem der Ansprüche von 1 bis 4, worin in seiner Anfangskonfiguration die Innenhülse (6) durch eine glatte Innenfläche (20) und durch eine geformte Außenfläche (21) mit einer Vielzahl von zweiten ringförmigen Aussparungen (22) begrenzt ist.

6. Verfahren nach Anspruch 5, wobei jede zweite ringförmige Aussparung (22) durch zwei Seitenwände (23) begrenzt wird, die im Wesentlichen die Form eines Kegelstumpfes mit gegenüberliegenden Hohlräumen aufweisen.

7. Verfahren nach einem der Ansprüche von 1 bis 6, wobei die Innenhülse (6) in einem Stück erhalten wird und in der Anfangskonfiguration und in ihrer Endkonfiguration durch eine durchgehende Seitenwand (19, 13) ohne Wandunterbrechungen und/oder Öffnungen begrenzt wird.

## Revendications

1. Procédé de fabrication d'une douille pour la connexion de deux éléments tubulaires (2, 3), la douille étant réalisée à partir d'un raccord externe (5), qui est en forme de cuvette et délimité par une paroi de fond annulaire (10) ; le procédé comprenant les étapes consistant à :
insérer, dans le raccord externe (5), un manchon interne (6) qui, dans sa configuration initiale, fait saillie axialement vers l'extérieur du raccord externe (5) ; et
appliquer, sur le manchon interne (6), une force axiale (F), de manière à déformer le manchon interne (6) lui-même depuis la configuration initiale vers une configuration finale dans laquelle le manchon interne (6) est entièrement maintenu à l'intérieur du raccord extérieur (5), et
dans lequel le manchon interne (6) est déformé par la force axiale (F), de manière à générer une pluralité de dents annulaires (14) faisant saillie vers l'intérieur de la bague par rapport à une paroi latérale (13) du manchon interne (6).

2. Procédé selon la revendication 1, dans lequel la force axiale (F) est appliquée sur une extrémité libre du manchon interne (6) faisant saillie vers l'extérieur du raccord externe (5).

3. Procédé selon la revendication 1 ou 2 et comprenant en outre l'étape consistant à : déformer une extrémité libre du raccord externe (5), de manière à former un rebord ou épaulement annulaire (12) configuré pour verrouiller axialement le manchon interne (6) dans le raccord externe (5) lui-même.

4. Procédé selon l'une quelconque des revendications 1 à 3, dans lequel le manchon interne (6) est déformé par la force axiale (F), de manière à générer une pluralité de premiers évidements annulaires (16), qui sont obtenus au niveau d'une surface extérieure (17) de la paroi latérale (13) du manchon interne (6).

5. Procédé selon l'une quelconque des revendications 1 à 4, dans lequel, dans sa configuration initiale, le manchon interne (6) est délimité par une surface interne lisse (20) et par une surface externe profilée (21) ayant une pluralité de deuxièmes évidements annulaires (22).

6. Procédé selon la revendication 5, dans lequel chaque deuxième évidement annulaire (22) est délimité par deux côtés latéraux (23) ayant sensiblement la forme d'un cône tronqué avec des concavités opposées.

7. Procédé selon l'une quelconque des revendications 1 à 6, dans lequel le manchon interne (6) est obtenu en une seule pièce et est délimité, dans sa configuration initiale et dans sa configuration finale, par une paroi latérale continue (19, 13) sans interruptions de parois et / ou ouvertures.
